## Europäisches Patentamt
## European Patent Office
## Office européen des brevets

(19)

(11) Numéro de publication: **0 274 926**
**B1**

(12) **FASCICULE DE BREVET EUROPEEN**

(45) Date de publication du fascicule du brevet: **30.01.91**

(51) Int. Cl.⁵: **E 04 B 2/74, F 16 B 5/06 //
G09F15/00**

(21) Numéro de dépôt: **87402697.4**

(22) Date de dépôt: **30.11.87**

(54) **Système d'assemblage de panneaux en des positions angulaires variées, et panneaux adaptés à l'utilisation de ce système.**

(30) Priorité: **01.12.86 FR 8616721**

(43) Date de publication de la demande:
**20.07.88 Bulletin 88/29**

(45) Mention de la délivrance du brevet:
**30.01.91 Bulletin 91/05**

(84) Etats contractants désignés:
**AT BE CH DE ES GB IT LI LU NL SE**

(56) Documents cités:
**EP-A-0 144 030
FR-A-2 150 958
US-A-3 766 692**

(73) Titulaire: **Savale, Yves
5, rue des Tennerolles
F-92210 Saint-Cloud (FR)**

(72) Inventeur: **Savale, Yves
5, rue des Tennerolles
F-92210 Saint-Cloud (FR)**

(74) Mandataire: **Jolly, Jean-Pierre et al
Cabinet Jolly 54, rue de Clichy
F-75009 Paris (FR)**

Courier Press, Leamington Spa, England.

**Description**

La présente invention concerne un système d'assemblage de panneaux en des positions angulaires variées. Elle concerne également des panneaux adaptés à l'utilisation d'un tel système.

On sait qu'en vue d'exposer des documents, de diviser une pièce d'un local en plusieurs parties ou de décorer un lieu fréquenté par le public, il est fréquent d'utiliser des panneaux, généralement rectangulaires, de dimensions et de couleurs variées, que l'on assemble sur les lieux d'utilisation en diverses positions.

Les panneaux juxtaposés peuvent être disposés dans un même plan, mais aussi faire des angles les uns par rapport aux autres, en formant des dièdres d'arête vertical ou horizontal. On obtient ainsi des effets qui retiennent l'attention des spectateurs et permettent de mettre en valeur les documents proposés à leur attention, dans le cas de panneaux d'exposition.

De très nombreux systèmes d'assemblage de tels panneaux ont déjà été proposés dans la technique antérieure, mais il n'existe pas de système répondant simultanément à l'ensemble des conditions suivantes:

assemblage de trois panneaux de manière à former deux dièdres dont les arêtes convergent en un point où est disposé un unique système d'assemblage;

possibilité de disposer des panneaux en toute position angulaire relative de 0 à 360°;

faculté pour l'utilisateur de réunir plusieurs panneaux dans des positions variées à l'aide d'un unique système d'assemblage;

verrouillage possible des panneaux en toute position assemblée;

assemblage des panneaux sans utilisation de quelque outil que ce soit;

surélévation possible d'un panneau avec un même système.

Il existe certes des systèmes d'assemblage, par exemple à charnières, qui remplissent isolément certaines de ces conditions, voir deux ou trois d'entre elles, (voir par exemple FR—A—2 150 958 qui forme la première partie de la revendication 1 et qui décrit une charnière pour panneaux articulés permettant d'assembler une pluralité de panneaux dans des positions angulaires variées), mais, à la connaissance du Demandeur, aucun système de la technique antérieure ne répond à l'ensemble de ces conditions.

Le système d'assemblage conforme à l'invention, qui présente ces avantages, comprend une pièce de liaison, constituée d'une partie mâle filetée à tête cylindrique associée à une partie femelle taraudée de même diamètre externe que ladite tête, la face de cette tête tournée vers ladite partie femelle étant évidée intérieurement de façon telle que la tranche de ladite tête fasse saillie latéralement par rapport à ladite face en direction de ladite partie femelle, les dimensions des parties mâle et femelle étant telles que ces organes puissent être assemblés manuellement par action sur leur tranche, sans utilisation d'aucun outil, et il est caractérisé en ce qu'il comporte:

une tige rectiligne prismatique, à section transversale en forme de polygone régulier, cette tige étant destinée à être engagée dans un logement de forme complémentaire ménagé dans lesdits panneaux, cette tige comportant à l'une de ses extrémités un profil de crochet apte à coiffer la partie en saillie de la tranche de ladite tête;

un moyen amovible pour verrouiller en position ladite tige dans les logements de profil complémentaire desdits panneaux.

Il est ainsi possible de rendre une tige solidaire d'un panneau en une pluralité de positions correspondant au nombre de côtés du polygone régulier de sa section et de rendre cette tige solidaire de la pièce de liaison en pinçant le crochet associé entre la tête de la partie mâle et la partie femelle également en une pluralité de positions par rapport à l'axe de cette pièce. On conçoit qu'en jouant ainsi sur les positions d'une tige associée à un même panneau et à une même pièce de liaison, il est possible de faire varier à volonté les positions d'assemblage de tels panneaux et notamment leur disposition angulaire. C'est ce que l'on illustrera ci-après en référence aux dessins annexés.

Pour certains modes d'assemblage, la pièce de liaison pourra avantageusement être double, une même tête étape équipée d'une partie mâle filetée sur chaque de ses faces, avec une partie femelle taraudée cylindrique associée à chaque partie mâle, les deux faces de ladite tête étant évidées en regards desdites parties femelles.

Ainsi qu'il a été indiqué, la tête de la pièce de liaison et le ou les parties femelles auront un profil cylindrique de même diamètre extérieur. Afin de faciliter leur préhension et leur actionnement sans outil, leur tranche sera de préférence moletée ou guillochée.

Le moyen de verrouillage de la tige dans son logement pourra être constitué de façon simple par une goupille, un cavalier, un clip ou similaire, engagé dans une rainure annulaire ménagée à la périphérie de la tige et dans une orifice du panneau associé.

L'invention a également pour objet un système d'assemblage du type défini ci-dessus, caractérisé en ce qu'il comprend au moins un panneau comportant au moins un évidement prismatique dont la section est un polygone régulier, apte à recevoir une tige de profile complémentaire dudit système d'assemblage.

Ledit évidement sera de préférence ménagé le long d'une tranche dudit panneau, de façon telle que la face de ladite tige contiguë à ladite tranche affleure celle-ci.

Dans une forme de réalisation préférée, ledit panneau sera échancré dans l'un de ses angles pour libérer un emplacement pour la pièce de liaison associée et la partie dudit panneau contiguë à cette pièce de liaison, s'amincira en direction de l'axe de celle-ci pour faciliter la mise en place au voisinage l'un de l'autre de deux panneaux dont le plan passe par ledit axe.

Les panneaux pourront naturellement être en des matériaux variés, adaptés à leur utilisation. En vue de faciliter leur montage et leur démontage, ils pourront avantageusement avoir une âme en forme de nid d'abeilles ou similaire interposée entre deux feuilles planes, en métal ou en matière plastique, l'ensemble formant ainsi une structure à la fois légère et rigide.

Les dessins annexés, qui n'ont pas de caractère limitatif, illustrent diverses formes de mise en oeuvre et applications de l'invention. Sur ces dessins:

La figure 1 est une vue en perspective éclatée illustrant le système d'assemblage selon l'invention, dans le cas d'une pièce de liaison double, utilisée pour assembler deux panneaux;

La figure 2 illustre, en position assemblée le système de la figure 1;

La figure 3 est une vue en perspective éclatée d'une pièce de liaison simple;

Les figures 4, 5 et 6 illustrent la possibilité d'assembler divers panneaux, réunis par un unique système d'assemblage, en une pluralité de positions angulaires.

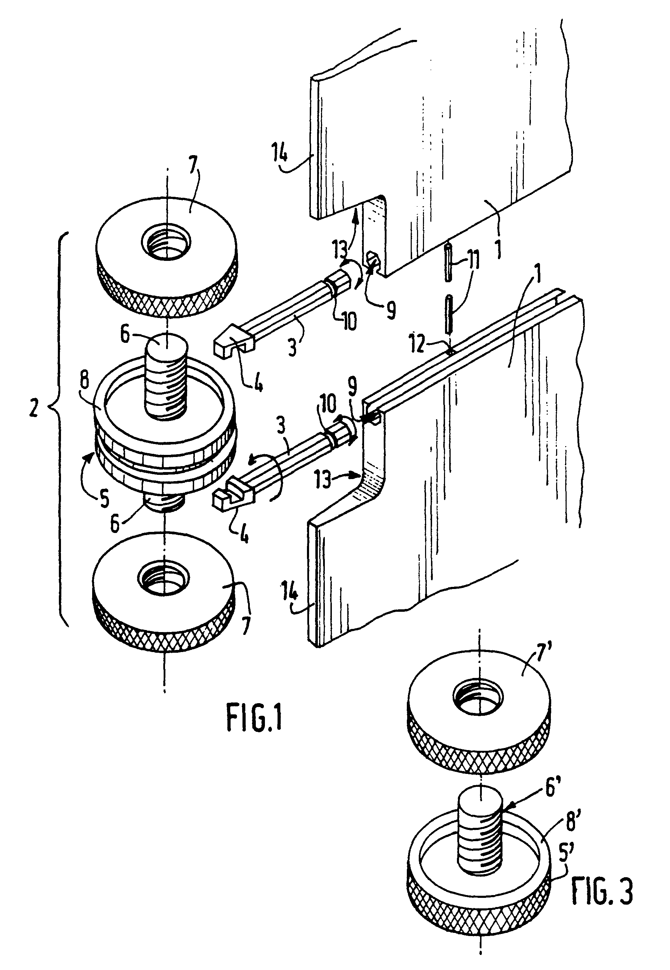

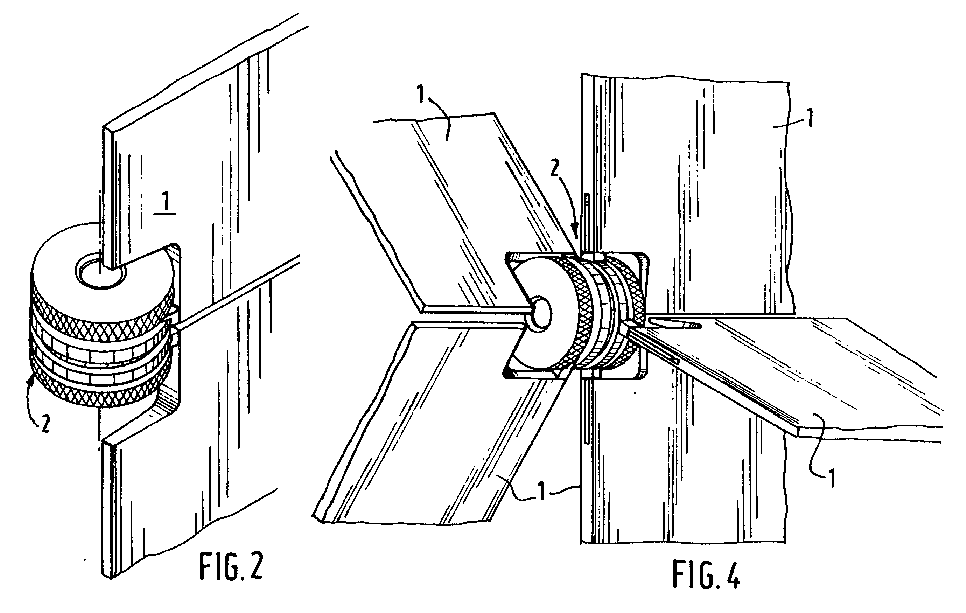

On se réferera d'abord aux figures 1 et 2, qui illustrent l'utilisation du système d'assemblage conforme à l'invention pour assembler de façon rigide deux panneaux 1 disposés dans un mème plan. Le système d'assemblage comprend une pièce de liaison double, désignée par la référence générale 2, et deux tiges prismatiques 3, à section en forme de polygone régulier—un octogone dans le cas du dessin—se terminant par un crochet 4 à section en U, qui coopère avec la pièce de liaison. Celle-ci comprend une tête cylindrique double 5, de part et d'autre de laquelle font saillie suivant son axe deux vis 6, coopérant respectivement avec un écrou cylindrique 7. Les deux faces de la tête 5 sont évidées de façon telle que la partie périphérique de la tête déborde latéralement en 8, en faisant saillie en direction de l'écrou correspondant. La partie 8 a une forme complémentaire de la partie à section en U du crochet 4, qui peut ainsi coiffer cette partie 8 et être verrouillée dans cette position à l'aide de l'écrou 7 correspondant.

Les tiges 3 peuvent elles-mêmes être engagées dans une pluralité de positions dans un évidement 9 de profil complémentaire, ménagé au voisinage d'une tranche des panneaux 1, de façon telle qu'une face de la tige affleure cette tranche. Une rainure annulaire 10 ménagée à la périphérie des tiges 3 permet de verrouiller ces tiges dans leurs logements, à l'aide d'une goupille 11 engagée dans un orifice 12 de la tranche des panneaux 1.

Ces panneaux sont échancrés en 13, dans leur angle contigu à la pièce de liaison 2, de manière à permettre de disposer la tranche correspondante 14 des panneaux au niveau de l'axe de cette pièce. On notera, en outre, que, de manière à pouvoir disposer les tranches 14 de deux ou plusieurs panneaux contigus au voisinage immédiat les uns des autres, au niveau de l'axe de la pièce de liaison (voir figure 4), les panneaux s'amincissent en direction de cette tranche.

Bien entendu, la pièce de liaison peut être simple, au lieu d'être double, comme représenté sur la figure 3, où les organes déjà décrits sont désignés par les mêmes chiffres de référence affectés de l'indice'.

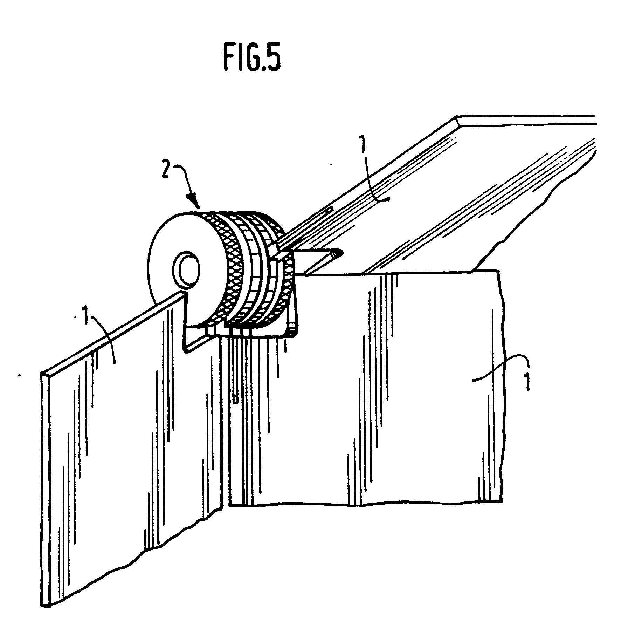

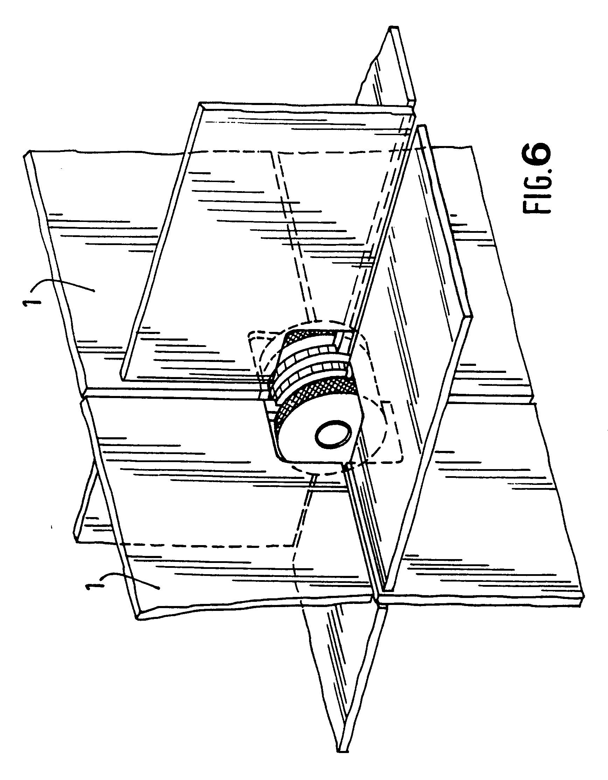

On conçoit qu'en variant la position des tiges 3 sur une même pièce de liaison 2, comme on le voit sur la figure 4, ou en orientant de façon différente ces tiges dans leurs logements 9, il est possible, de façon simple, d'assembler deux ou plusieurs panneaux contigus dans toute position angulaire relative (voir, par exemple, les figures 5 et 6).

On remarquera que l'assemblage ou le démontage des panneaux avec le système qui vient d'être décrit s'effectue manuellement, sans avoir recours à aucun outil. Comme représenté, afin de pouvoir actionner facilement à la main les têtes 5 et les écrous 7 des pièces de liaison, leur tranche sera guillochée ou moletée. Cette pièce de liaison pourra être métallique ou en matière plastique.

L'invention apporte donc un moyen simple pour assembler rigidement en toute position angulaire relative, sans utilisation d'outiles, des panneaux à usage multiple, qu'il est tout aussi facile de démonter après utilisation. Naturellement, l'invention n'est pas limitée aux formes de réalisation qui viennent d'être décrites et elle englobe également toutes les variantes que pourrait concevoir l'homme de l'art. C'est ainsi, par exemple, que les gorges 9 des panneaux dans lesquelles sont engagées les tiges 3 pourraient être ménagées dans des profilés rapportés sur les panneaux et non dans la masse du panneau.

**Revendications**

1. Système d'assemblage pour panneaux (1), comprenant un pièce de liaison (2), constituée d'une partie mâle filetée (6) à tête cylindrique (5) associée à une partie femelle cylindrique (7) de même diamètre externe que ladite tête, la face de cette tête tournée vers ladite partie femelle étant évidée intérieurement de façon telle que la tranche de ladite tête fasse saillie latéralement (en 8) par rapport à ladite face en direction de ladite partie femelle, les dimensions de ladite partie mâle et de ladite partie femelle étant telles que ces organes puissent être assemblés manuellement par action sur leur tranche, sans utilisation d'aucun outil, ce système étant caractérisé en ce qu'il comporte:

une tige rectiligne prismatique (3) à section transversale en forme de polygone régulier, cette tige étant destinée à être engagée dans un logement (9) de forme complémentaire ménagé dans lesdits panneaux (1), cette tige comportant à l'une de ses extrémités un profil de crochet (4) apté à coiffer la partie en saillie (8) de la tranche de ladite tête;

et un moyen amovible (11) pour verrouiller en position ladite tige (3) dans les logements (9) de profil complémentaire desdits panneaux (1).

2. Système d'assemblage selon la revendication 1, caractérisé en ce que ladite pièce de liaison est double, ladite tête (5) étant munie d'une partie mâle filetée (6) sur chacune de ses faces, avec une partie femelle cylindrique taraudée (7) associée à chaque partie femelle, la tranche de ladite tête faisant saillie latéralement en (8) par rapport à chacune de ses faces.

3. Système d'assemblage selon l'une des revendications 1 et 2, caractérisé en ce que la tranche de ladite tête (5) et/ou de ladite partie femelle (7) est moletée ou guillochée.

4. Système d'assemblage selon l'une des revendications 1 à 3, caractérisé en ce que ledit moyen de verouillage de la tige (3) dans son logement (9) comprend une goupille (11), un cavalier, un clip ou similaire, apte à être engagé dans une rainure annulaire (10) de la périphérie de ladite tige et dans un orifice (12) du pannau associé.

5. Système d'assemblage selon l'une des revendications 1 à 4, caractérisé en ce qu'il comprend au moins un panneau (1) comportant au moins un évidement prismatique (9) en forme de polygone régulier, apte à recevoir une tige (3) de profile complémentaire dudit système.

6. Système d'assemblage selon la revendication 5, caractérisé en ce que ledit évidement prismatique (9) est ménagée le long d'une tranche du panneau (1), de préférence de façon telle que la face de la tige (3) associée contiguë à cette tranche affleure celle-ci.

7. Système d'assemblage selon l'une des revendications 5 et 6, caractérisé en ce que ledit panneau (1) comporte une échancrure (13) dans l'angle correspondant à la pièce de liaison associée du système d'assemblage associé.

8. Système d'assemblage selon l'une des revendications 5 à 7, caractérisé en ce que ledit panneau (1) s'amincit en direction de la tranche correspondant à l'axe de la pièce de liaison (2) du système d'assemblage associé.

**Patentansprüche**

1. Einrichtung zur Zusammensetzung von Platten (1), die ein Verbindungsteil (2) bestehend aus einem Aussengewinde-Einsteckteil (6) mit Zylinderkopf (5) aufweist, das einem aufnehmenden Zylinderteil (7) mit demselben Aussendurchmesser (7) wie dem des Kopfes zugeordnet ist, wobei die dem aufnehmenden Teil zugewendete Seite im Inneren derart ausgespart ist, daß sie Scheibe des Kopfes gegenüber der Seite in Richtung des aufnehmenden Teils seitlich (bei 8) hervortritt, und wobei die Abmessungen des Einsteckteils und die des Aufnahmeteils so beschaffen sind, daß diese Organe durch Einwirkung von Hand auf ihre Scheibe ohne Verwendung eines Werkzeugs zusammengesetzt werden können, gekennzeichnet durch

einen geraden prismatischen Stab (3) mit einem transversalen Querschnitt in Form eines regulären Vielecks zur Ineingriffnahme in einer komplementär gestalteten Lagerung (9), die in den Platten (1) ausgespart ist, wobei der Stab an einem seiner Ende ein Hakenprofil (4) aufweist, durch das der hervortretende Teil (8) der Scheibe des Kopfes abdeckbar ist, und

ein lösbares Teil (11) zum stellungsgemäßen Verriegeln des Stabes (3) in den Lagerungen (9) des komplementären Profils der Platten (1).

2. Einrichtung nach Anspruch 1, dadurch gekennzeichnet, daß das Verbindungsteil doppelt ausgeführt ist, wobei der Kopf (5) mit einem Aussengewinde-Einsteckteil (6) auf jeder seiner Seiten ausgestattet ist, ein zylinderförmiges Innengewinde-Aufnahmeteil jedem aufnehmenden Teil zugeordnet ist, und wobei die Scheibe des Kopfes gegenüber jeder dieser Seiten bei (8) seitlich hervortritt.

3. Einrichtung nach einem der vorhergehenden Ansprüche 1 und 2, dadurch gekennzeichnet, daß die Scheibe des Kopfes (5) und/oder das aufnehmende Teil (7) gerieft und guillochiert ist.

4. Einrichtung nach einem der vorhergehenden Ansprüche 1 bis 3, dadurch gekennzeichnet, daß die Verriegelung des Stabs (3) in ihrer Lagerung (9) einen Stift (11), einen Reiter, einen Clip oder dgl. aufweist, der in der Lage ist, von einer ringförmigen Rille (10) der Peripherie des Stabes sowie einer der Platte zugeordneten Öffnung (12) in Eingriff genommen zu werden.

5. Einrichtung nach einem der vorhergehenden Ansprüche 1 bis 4, dadurch gekennzeichnet, daß sie zumindest eine Platte (1) aufweist, die zumindest eine prismatische Ausnehmung (9) in Form eines regulären Vielecks besitzt, von der ein Stab mit dem der Einrichtung komplementären Profil aufgenommen werden kann.

6. Einrichtung nach Anspruch 5, dadurch gekenneichnet, daß die prismatische Ausnehmung (9) längs einer Scheibe der Tafel (1) vorzugsweise derart ausgespart ist, daß die Seite des zugeordneten, an die Scheibe angrenzenden Stabes (3) mit ihm bündig gemacht ist.

7. Einrichtung nach einem der vorhergehenden Ansprüche 5 und 6, dadurch gekennzeichnet, daß die Platte (1) einen bogenförmigen Ausschnitt (13) in dem Winkel aufweist, der dem der Zusammensetzungseinrichtung zugeordneten Verbindungsteil entspricht.

8. Einrichtung nach einem der vorhergehenden Ansprüche 5 bis 7, dadurch gekennzeichnet, daß die Platte (1) in der der Achse des Verbindungsteils (2) der zugeordneten Zusammensetzungseinrichtung entsprechenden Richtung der Scheibe dünner wird.

**Claims**

1. A system of assembly for panels (1), comprising a connecting piece (2) consisting of a threaded male part (6) with a cylindrical head (5) associated with a cylindrical female part (7) of the same outer diameter as said head, the face of this head facing said female part being internally recessed in such a way that the edge of said head projects laterally (at 8) with respect to said face in the direction of said female part, the dimensions of said male part and said female part being such that these members may be assembled manually by action on their edges, without use of any tool, this system being characterized in that it comprises:

a prismatic rectilinear rod (3) with a transverse section in the form of a regular polygon, this rod being designed to be engaged in a receptacle (9) of a complementary shape formed in said panels (1), this rod comprising at one of its ends a hook profile (4) capable of engaging over the projecting part (8) of the edge of said head;

and a movable means (11) for locking in position said rod (3) in the receptacles (9) of the complementary profile of said panels (1).

2. An assembly system according to Claim 1, characterized in that said connecting piece is double, said head (5) being provided with a threaded male part (6) on each of its faces, with a tapped cylindrical female part (7) associated with each male part, the edge of said head projecting laterally at (8) with respect to each of its faces.

3. An assembly system according to either one of Claims 1 and 2, characterized in that the edge of said head (5) and/or of said female part (7) is knurled or chequered.

4. An assembly system according to any one of Claims 1 to 3, characterized in that said means of locking the rod (3) in its receptacle (9) comprises a pin (11), a staple, a clip or the like, capable of being engaged in an annular groove (10) in the periphery of said rod and in an orifice (12) of the associated panel.

5. An assembly system according to any one of Claims 1 to 4, characterized in that it comprises at least one panel (1) comprising at least one prismatic recess (9) in the form of a regular polygon, capable of receiving a rod (3) of complementary profile belonging to said system.

6. An assembly system according to Claim 5, characterized in that said prismatic recess (9) is formed alone one edge of the panel (1), preferably in such a way that the face of the associated rod (3) contiguous with this edge is flush therewith.

7. An assembly system according to either one of Claims 5 and 6, characterized in that said panel (1) comprises an indentation (13) in the angle corresponding to the associated connecting piece of the associated assembly system.

8. An assembly system according to any one of Claims 5 to 7, characterized in that said panel (1) narrows in the direction of the edge corresponding to the axis of the connecting piece (2) of the associated assembly system.

FIG.1

FIG. 3

FIG.2

FIG.4

EP 0 274 926 B1

# FIG.5

FIG.6

4